# EUROPEAN PATENT SPECIFICATION

(11) **EP 2 281 470 B1**
(45) Date of publication and mention of the grant of the patent: **11.06.2014**
(21) Application number: 10167825.8
(22) Date of filing: 30.06.2010
(51) Int. Cl.: A24C 5/34, G01N 21/952

(54) **A method and equipment for monitoring the external integrity of tobacco products**
Verfahren und Gerät zur Überprüfung der externen Integrität von Tabakprodukten
Procédé et équipement pour surveiller l'intégrité extérieure de produits de tabac

(30) Priority: 06.08.2009 IT BO20090530
(43) Date of publication of application: 09.02.2011
(73) Proprietor: G.D S.p.A., 40133 Bologna (IT)
(72) Inventor: Cuppini, Michele, 40011 Anzola Emilia ( Bologna) (IT); Osti, Eugenio, 40069 Zola Predosa (Bologna) (IT)
(74) Representative: Bianciardi, Ezio

(56) References cited:
- EP-A1- 0 812 548
- EP-A1- 1 430 796
- EP-A1- 1 826 557
- EP-A1- 2 022 347
- EP-A2- 0 548 695
- EP-A2- 0 570 163
- WO-A1-2004/083834
- US-A- 5 366 096

## Description

The present invention relates to a method of monitoring the external integrity of tobacco products.

The present invention relates also to equipment for monitoring the external integrity of tobacco products.

The method and equipment according to the invention can be employed to advantage in machines for manufacturing and/or processing tobacco products.

In the case of cigarette makers, particularly, it is the practice to inspect the external integrity of the cigarettes by causing them to advance one behind another, their axes disposed transversely to the conveying direction, along a predetermined monitoring path that passes in front of an optical quality control device operating at a point downstream of a cigarette making unit.

The quality control device in question operates by sampling a limited number of straight line generators on the outer surface of each finished cigarette, then reading the images of these same sample generators and comparing each scanned image with a model or reference image, in order to identify and indicate any superficial defects of manufacture that may be present (for example, ventilation holes imperfectly formed and/or obstructed, breaks in gummed joints, lettering out of position or imperfectly inked, etc.), and consequently determining whether or not the cigarette is of acceptable quality.

The quality control device consists generally in a linear camera utilizing a CCD array, familiar to persons skilled in the art as a Line Scan Camera, which is able to read the surface of an object as a series of single scan lines. In operation, the scan line of the camera falls on a sample generator of the outer surface presented by the cigarette as it passes in front of the camera at a given moment.

It is the usual practice to scan a plurality of sample generators per single cigarette, utilizing two or more cameras arranged along the quality control path; in this instance the cigarette is caused to rotate on its longitudinal axis during the passage from one camera to the next, in such a way that a different generator is presented for scanning by each camera.

The visual inspection method outlined above betrays the drawback that, in the event of airborne foreign matter (specks of dust, fluff, tobacco particles, etc...) occupying the space between the cigarette and the optical scanning device during operation, this will be interpreted spuriously by the device as an abnormality and may trigger the rejection of a cigarette, even though in reality the cigarette presents no defects.

The drawback in question is highlighted especially in dust-laden surroundings such as those in which a cigarette maker will typically operate.

As the manufacturing sector has evolved, this problem has been overcome.

In effect, the applicant has developed a quality control system wherein, after each scan performed by an optical detection device, the image captured by this same device is compared with a reference image.

In the event of there being one or more foreign bodies interposed between the camera and the cigarette (such as specks of dust, fluff, tobacco particles, etc., as mentioned above), certain of the scans performed by the camera could produce images that differ from the reference image, not because the cigarette is actually defective, but due to the presence of the foreign manner.

This however does not necessarily result in the cigarette being rejected, since the majority of the scans will not be affected by the presence of the foreign matter in question: the typical particle sizes liable to influence the quality control procedure are in reality much smaller than the overall width of the scan lines generated by the camera.

Once the camera has completed a plurality of scans, the system calculates the ratio between "positive" scans, that is to say indicating an irregularity on the cigarette, and "negative" scans: should the ratio exceed a given selected value, the system generates a signal that can be used to activate an ejector device.

Even this improved system is not devoid of practical drawbacks, however.

In effect, the system in question necessarily utilizes a plurality of cameras, so as to produce a given number of scans that can be processed in order to determine whether or not the inspected cigarette is acceptable.

Such a solution clearly dictates a significant level of complexity in design, construction and computational capability, not to mention a notable bulkiness of the system, all tending to complicate maintenance operations and increase production costs.

Should an attempt be made to mitigate these problems by utilizing just one camera to perform multiple scans, the result would be to occasion an unacceptable reduction in hourly production rate, given that the cigarette would need to pause in front of the camera for length of time sufficient to complete all of the necessary scans. Applying this procedure for all of the cigarettes advancing along the quality control path, the effect would be to produce a string of delays which, given the kind of output rates achievable today (up to 20,000 cigarettes per minute), would be outside of any acceptable tolerance.

Accordingly, the object of the present invention is to provide a method and equipment for monitoring the external integrity of tobacco products, such as will enable manufacturers to implement a reliable quality control, employing a minimal number of detection devices while also maintaining a high production tempo.

One object of the invention, in particular, is to provide a system capable of reliably foreseeing and avoiding "false positive" situations, that is to say situations where sound tobacco products are rejected as substandard on the basis of spurious detection events.

A further object of the present invention is to provide a method and equipment such as will enable the entire outer surface of tobacco products to be scanned without utilizing any special systems or techniques for the purpose of rotating the single tobacco products about their longitudinal axes.

The invention will now be described in detail, by way of example, with the aid of the accompanying drawings, in which:
- figure 1 is a schematic side view of a machine for manufacturing or processing tobacco products, illustrating the application of the present invention, with certain parts omitted better to reveal others;
- figures 2 and 2a are diagrams illustrating the mutual placement of elements essential to the present invention, and the effect obtainable by adopting this same mutual placement;

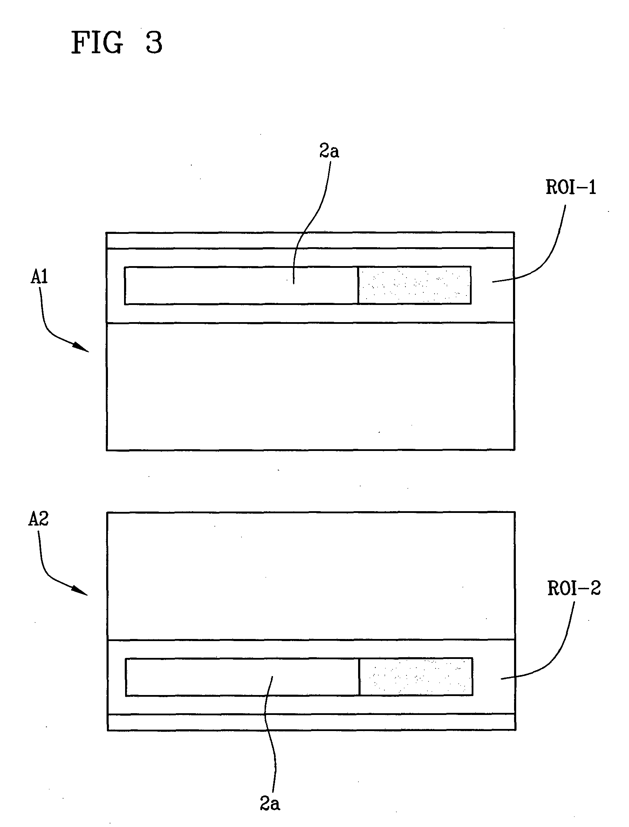

- figures 3 and 4 are diagrammatic illustrations of images used in processing steps forming part of the method according to the invention.

With reference to the accompanying drawings, numeral 1 denotes equipment according to the present invention, in its entirety, for monitoring the external integrity of tobacco products.

This same equipment 1 is used to implement the method according to the present invention.

As stated above, the invention finds application to advantage in machines used for manufacturing and/or processing tobacco products.

In the following specification, and in the claims appended, the term tobacco products 2 relates to cigars, cigarettes or filters, and particularly to cigarettes.

By way purely of example, the invention will be described referring directly to a machine 9 for manufacturing cigarettes 2, known conventionally as a cigarette maker.

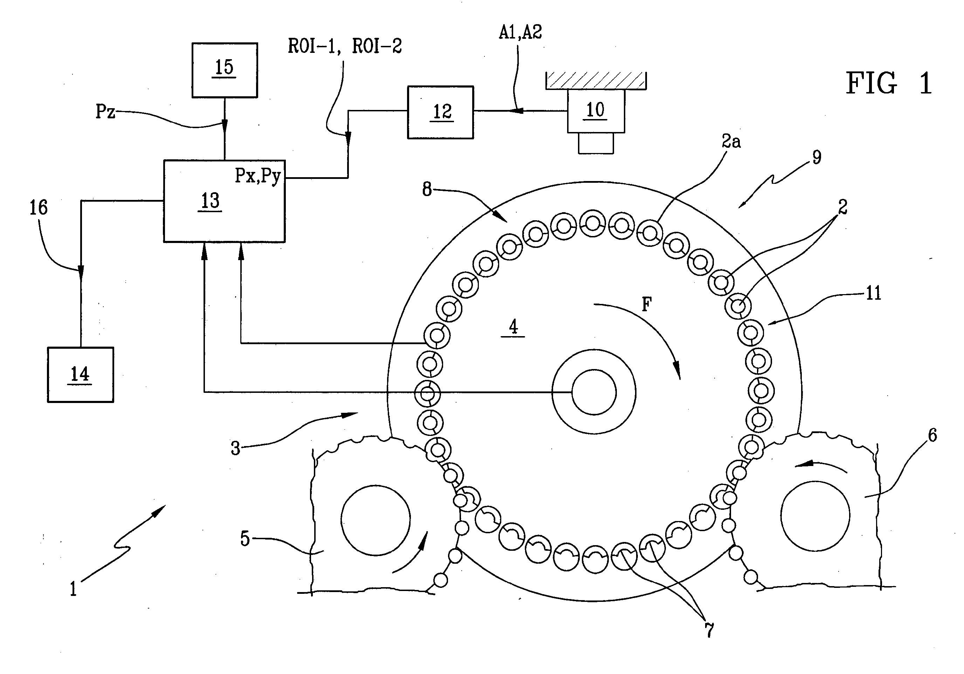

As illustrated schematically in figure 1, the machine 9 is equipped with a conveyor 3 carrying cigarettes 2, comprising a transport roller 4 of familiar type that forms part of a filter tip attachment machine, by way of example.

Cigarettes 2 to be inspected are supplied to the transport roller 4 singly and in succession by an infeed roller 5; following inspection, the cigarettes 2 are distanced from the conveyor by an outfeed roller 6. The various conveying rollers are set in rotation about their respective axes by drive means of conventional type (not illustrated).

The transport roller 4 presents a plurality of peripheral flutes 7, each designed to admit and retain a respective cigarette 2. The flutes 7 are caused by the roller 4 to advance along a feed direction denoted F (revolving clockwise, as seen in figure 1), following a feed path 11 of circular trajectory that includes a segment definable as a monitoring path 8.

The equipment 1 comprises a scanning device 10 by means of which to capture a first image A1 of a single tobacco product 2a, and thereafter a second image A2 of the selfsame tobacco product 2a;

In the example described and illustrated, the tobacco product 2a is one of the aforementioned cigarettes 2.

The scanning device 10 is preferably a matrix type of device, and in particular, the device might be a C-MOS camera.

In other words, the device 10 in question is able to scan images having a matrix type of structure, that is to say consisting in a plurality of rows and a plurality of columns that combine to make up a matrix.

The scanning device 10 will differ preferably from conventional CCD array line scan devices, which typically are able to detect or scan an object or surface by generating a single scan line.

The size of each image A1 and A2 captured by the scanning device 10 disclosed can be as large as, for example, 1024 x 1024 pixels.

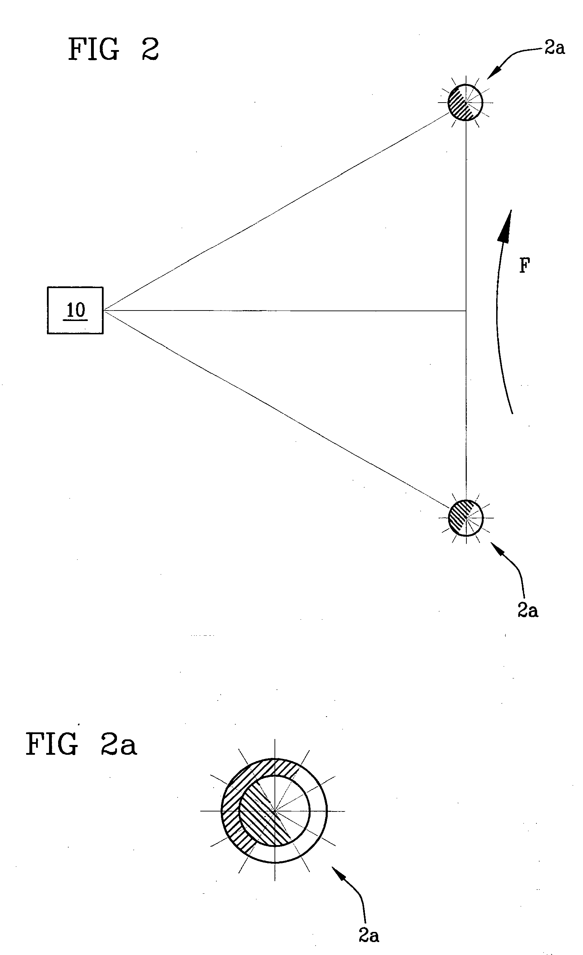

To advantage, the scanning device 10 is placed in such a way as to scan portions of a single tobacco product 2a that differ slightly from one another, as illustrated schematically in figure 2: in each of the two scanning positions illustrated, the device 10 is able to address a portion of the lateral surface presented by the tobacco product 2a that lies between two substantially diametrically opposed longitudinal generators, separated in effect by an angle of approximately 180 degrees (subtended at a centre coinciding with the longitudinal axis of the tobacco product 2a). Given that the tobacco product 2a occupies different positions relative to the scanning device 10 at successive moments, the device is able to scan different portions of the surface, partially overlapping one another. Accordingly, the equipment 1 is able to inspect a portion of the tobacco product 2a lying between generators separated by an angle greater than 180 degrees, with the result that the quality control procedure is rendered more reliable.

The schematic of figure 2a shows the different portions of the tobacco product 2a scanned in the two distinct positions of figure 2, indicated by contrasting hatch lines.

As will become clear in due course, the method according to the invention involves comparing different images of a given tobacco product 2a scanned by the same single scanning device 10. The comparisons can be made by calculating statistical parameters representing different characteristics of the images. With this solution, it becomes possible to avoid problems deriving from the fact that the different scans show different portions of the tobacco product 2a, which could be compared by means of a tradition pixel-to-pixel superimposition only in part, and using particularly complex and elaborate algorithms (hence slow and therefore unsuitable for the application in question) capable of obviating intrinsic differences between the two images.

Preferably, the first and second images A1 and A2 are digital images and, likewise preferably, will be of the same size.

Again preferably, the first and second images A1 and A2 show not only the one tobacco product 2a mentioned thus far, but also other tobacco products 2b, 2c, ... of the same type.

To advantage, the equipment 1 comprises a selection module 12, by means of which to select a first region of interest ROI-1 internally of the first image A1.

The area of the first region of interest ROI-1 is smaller than the area of the first image A1.

The first region of interest ROI-1 contains only the tobacco product denoted 2a, to all intents and purposes; in other words, the selection module 12 is designed to exclude any tobacco product 2b, 2c, 2n... from the first image A1 other than the tobacco product denoted 2a.

In similar fashion, the selection module 12 serves to select a second region of interest ROI-2 internally of the second image A2.

The second region of interest ROI-2 contains only the tobacco product denoted 2a, to all intents and purposes; in other words, the selection module 12 is designed to exclude any tobacco product 2b, 2c, 2n... from the second image A2 other than the tobacco product denoted 2a.

Purely by way of example, if the size of the first image A1 and of the second image A2 is 1024x1024 pixels, then the size of the first and second regions of interest ROI-1 and ROI-2 might be 1024x90 pixels.

More generally, the dimension of the first region of interest ROI-1 and the second region of interest ROI-2, measured transversely to the feed direction F followed by the tobacco products, could be substantially the same as the dimension of the first image A1 and the second image A2, measured transversely to the feed direction F.

Also, the dimension of the first and second regions of interest ROI-1 and ROI-2, measured parallel to the feed direction F followed by the tobacco products, could be smaller than the dimension of the first and second images A1 and A2, measured parallel to the feed direction F.

Preferably, the ratio between the dimension of the images A1 and A2 measured parallel to the feed direction F followed by the tobacco products, and the dimension of the regions of interest ROI-1 and ROI-2, is substantially equivalent (or at least, very close) to the number of tobacco products appearing in each of the images A1 and A2.

In greater detail, the first and second images A1 and A2 represent one and the same portion of the feed path 11 along which the tobacco product 2a advances, whilst the tobacco product 2a occupies different positions along the selfsame path in the first image A1 and in the second image A2.

This same portion of the feed path 11 followed by the tobacco product 2a will constitute the aforementioned monitoring path 8 at least in part.

The selection module 12 is programmed to select only the tobacco product denoted 2a, within the first image A1 and the second image A2.

When selecting the first and second regions of interest ROI-1 and ROI-2, advantageously, the selection module 12 is activated synchronously with the movement of the tobacco product along the monitoring path 8.

In one possible implementation, the selection module 12 is programmed in such a way as to select portions of given shape, size and positioning within the images A1, A2, An..., taken cyclically and at predetermined moments defined by the progress of the tobacco products.

Alternatively, the selection module 12 might receive external activation signals, representing a moment in time and/or predetermined geometrical characteristics (position, shape, dimensions) of the area to be selected. For example, such activation signals can be supplied by an electronic processing unit 13, which will be described more fully in due course.

Preferably, the first and second images A1 and A2 are of substantially rectangular outline.

Likewise preferably, the first and second regions of interest ROI-1 and ROI-2 are of substantially rectangular outline.

In general, the first and second images A1 and A2 represent a plurality of tobacco products caused to advance along the monitoring path 8, and the tobacco product denoted 2a is one product among this same plurality.

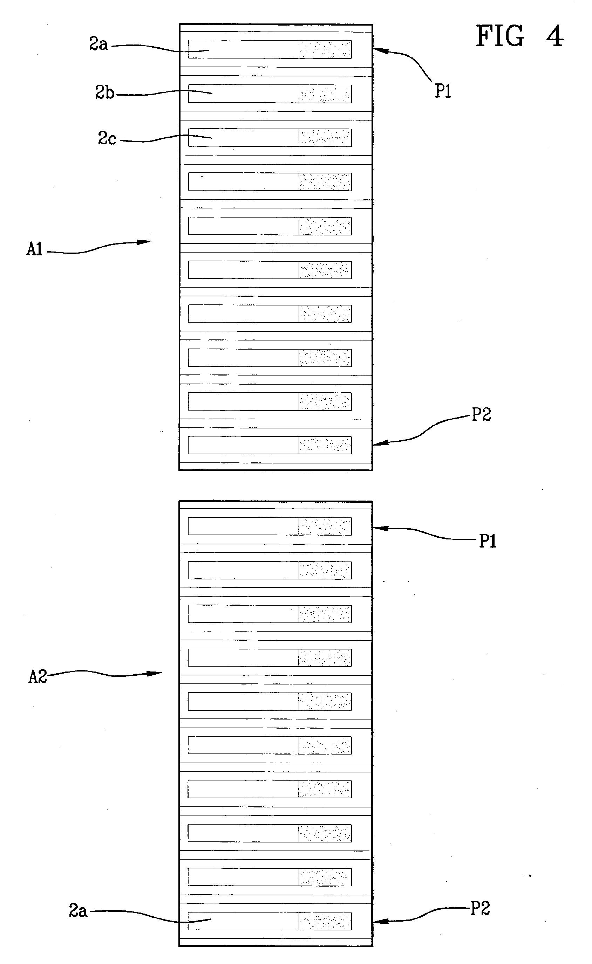

The tobacco products are arranged as an ordered succession in the first image A1 and the second image A2; the ordered succession presents an initial or forwardmost limit position P1 and a final or rearwardmost limit position P2 occupiable by the single tobacco products (figure 4).

Preferably, in the first image A1, the tobacco product denoted 2a occupies the forwardmost limit position P1.

Likewise preferably, in the second image A2, the tobacco product 2a occupies the rearwardmost limit position P2.

Thus, the selection module 12 is configured in such a way as to select the first region of interest ROI-1 coinciding with the forwardmost limit position P1, and to select the second region of interest ROI-2 coinciding with the rearwardmost limit position P2.

As already indicated, the configuration in question might derive from internal parameters, programmed previously, or from external signals received in real time.

Advantageously, the selection module 12 can be integrated into the scanning device 10.

The equipment 1 further comprises an electronic processing unit 13, associated operationally with the scanning device 10 and with the selection module 12, and in receipt of the first and second regions of interest ROI-1 and ROI-2.

The processing unit 13 is configured to compare the first and the second region of interest ROI-1 and ROI-2 with one or more references, and to generate a notification signal 16 based on the result of the comparison.

The notification signal 16 indicates that the external integrity of the tobacco product 2a represented in the first and second regions of interest ROI-1 and ROI-2 is impaired.

In a preferred implementation of the method, the notification signal 16 is a control signal serving to activate a device 14 such as will eject the defective tobacco product 2a.

Preferably, the selection module 12 and the processing unit 13 are interconnected by a serial data transmission line.

With the inclusion of the selection module 12, in effect, it becomes possible to reduce the amount of data transmitted to the processing unit 13, given that instead of transmitting the images A1 and A2 in their entirety, the module transmits only the regions of interest ROI-1 and ROI-2 which, being obtained by a process of selection, are inevitably "lighter" than the full images captured by the scanning device 10.

With this arrangement, the equipment 1 is able to expedite the necessary quality checks on the tobacco products, operating even at ultra high speed, in view of the fact that communication between the scanning device 10 and the processing unit 13 is optimized by the selection module 12.

To advantage, the equipment 1 further comprises a memory register 15, associated operationally with the processing unit 13.

Stored in the memory register 15 will be one or more references representing the acceptable level of quality for a single tobacco product, in terms of its external integrity.

The processing unit 13 is configured to perform the following steps:
- comparing the first region of interest ROI-1 with the one or more references stored in the memory register 15;
- comparing the second region of interest ROI-2 with the one or more reference images stored in the memory register 15.

As long as both regions of interest ROI-1 and ROI-2 show the external integrity of the tobacco product 2a to be as required, the system is able to identify the product 2a as being effectively free of defects and consequently will not generate the notification signal 16.

In the event that only one of the regions of interest ROI-1 or ROI-2 should show the external integrity of the tobacco product 2a to be as required, whereas the other shows the external integrity to be impaired, the system will identify this impaired integrity, not replicated in both the regions of interest ROI-1 and ROI-2, as being attributable to the presence of a foreign body interposed between the scanning device 10 and the tobacco product 2a. Accordingly, this situation is interpreted as representing a tobacco product 2a effectively free of defects, and the notification signal 16 is therefore not generated.

In the event that both regions of interest ROI-1 and ROI-2 should suggest an impaired external integrity of the tobacco product 2a, the processing unit 13 proceeds to compare the first and second regions of interest ROI-1 and ROI-2 one with another; should the images of the first and the second regions of interest ROI-1 and ROI-2 appear substantially identical, the notification signal 16 is generated. This circumstance is interpreted by the system as a "positive", given that both regions of interest ROI-1 and ROI-2 indicate substantially the same defect and it is therefore extremely unlikely (indeed practically impossible) that two such scans occurring together could be attributable to the presence of foreign matter (particles, dust, etc.).

Conversely, in the event that the images of the first region of interest ROI-1 and the second region of interest ROI-2 should be substantially dissimilar, then the apparent defect would be attributable to minute foreign bodies interposed between the scanning device 10 and the tobacco product 2a, creating two different "disturbances" in the scan.

The foregoing reference to the first and second regions of interest ROI-1 and ROI-2 as being "substantially identical" signifies, in practice, an identicalness or similarity falling within a predetermined range of tolerance.

This will be clarified further, entering into greater detail with regard to the types of comparisons that can be performed.

When effecting a comparison between the regions of interest ROI-1 and ROI-2 and the references aforementioned, the processing unit 13 can apply one or more parameters Px and Py descriptive of each region of interest ROI-1 and ROI2, comparing these parameters with one or more reference parameters Pz stored in a memory register (which conveniently could be the same memory register 15 as described above).

The notification signal 16 can then be generated on the basis of the comparison between the descriptive parameters Px and Py and the one or more reference parameters Pz.

As regards the comparison between the first region of interest ROI-1 and the second region of interest ROI-2, the processing unit 13 can proceed by:
- determining one or more parameters Px and Py descriptive respectively of each region of interest ROI-1 and ROI-2;
- comparing the one or more parameters Px descriptive of the first region of interest ROI-1 with the one or more parameters Py descriptive of the second region of interest ROI-2.

The notification signal 16 is generated in the event that the comparison between the parameters descriptive of the first region of interest ROI-1 and the parameters descriptive of the second region of interest ROI-2 should show a difference less than a predetermined tolerance threshold, or rather in the event that regions of interest ROI-1 and ROI-2 are substantially identical.

The descriptive parameters Px and Py in question might be obtained by processing the regions of interest ROI-1 and ROI-2, for example using statistical algorithms or algorithms of other type, in order to extract representative data such as can be compared with quantities homogeneous thereto.

By way of example and with no limitation implied, the descriptive parameters Px and Py and the reference parameters Pz can be determined in accordance with the teaching provided by Italian patent application n° IT2008BO00075 filed in the name of the same applicant, which is incorporated here by way of reference.

Adopting the principles disclosed in the cited application, the reference parameters Pz could refer, by way of example, to one or more of the following characteristics:
- the position occupied by one end of the filter tipped tobacco product 2, in relation to the aspirating seat (peripheral flute 7), as measured along the direction of its longitudinal axis;
- the diameter of the tobacco product 2;
- the grey level of the filter paper;
- the type of tipping paper (for example, white or simulated cork pattern).

Ranges of acceptability are established for each of the characteristics in question.

After the regions of interest ROI-1 and ROI-2 have been scanned and selected, the parameters Px and Py are calculated by reference to these same characteristics.

The values of the descriptive parameters Px and Py relative to the regions of interest ROI-1 and ROI-2 are then compared with the ranges of tolerance set for the reference parameters Pz, applying the logic indicated above, whereupon it may also be necessary to compare the parameters Px descriptive of the first region of interest ROI-1 with the parameters Py descriptive of the second region of interest ROI-2, following which the notification signal 16 will be generated, or not, depending on the result.

It will be appreciated that the method described thus far relates to a single tobacco product 2a.

Self-evidently, the method and the equipment 1 according to the invention can be applied to a plurality of tobacco products, and indeed the method will be applied preferably to all of the tobacco products presented in succession to the scanning device 10.

In the preferred embodiment illustrated, each scanned image includes ten tobacco products, by way of example; in a succession of ten consecutive images, the system might use the first (in which the tobacco product 2a occupies the forwardmost limit position P1) and the last (in which the tobacco product 2a occupies the rearwardmost limit position P2). The intermediate images would be used in verifying the integrity of the other tobacco products 2b, 2c, 2n...

The intermediate images could also be utilized to perform a greater number of checks on the single tobacco product 2a, that is to say an inspection taking account of more than two images (or regions of interest) representing one and the same tobacco product 2a.

To advantage, the method could be implemented using more than one scanning device 10.

In particular, the equipment could comprise a first scanning device 10 directed toward a first drum (transport roller 4) carrying the tobacco products 2, and a second scanning device 10 directed toward a second drum, onto which the tobacco products are transferred from the first drum.

When carried on the first drum, each tobacco product 2 is positioned with one portion freely exposed to view, and a portion lying in contact with the respective peripheral flute 7 of the drum, which is hidden from view; when the tobacco product is transferred to the second drum, the hitherto visible portion becomes the portion in contact with the respective flute 7 of the second drum, and the hitherto hidden portion becomes the portion exposed to view.

Employing a pair of scanning devices 10, accordingly, each associated with a respective drum, it becomes possible to inspect the entire outer surface of each tobacco product 2.

Importantly, this total exposure is achieved without the use of any special devices or mechanisms serving to rotate the single tobacco products 2 about their longitudinal axes.

Each scanning device 10 is associated suitably with a selection module 12 and with a processing unit 13, so that the operations described above can be performed both on the images captured by means of the first scanning device 10 and on the images captured by means of the second scanning device 10.

Advantageously, a single processing unit 13 could be used to handle the data coming from both of the two scanning devices 10.

In a preferred implementation, the method will include an auxiliary selection step performed by the aforementioned selection module 12, or by an auxiliary selection module associated with this same module 12.

The auxiliary selection step involves selecting a first intermediate portion, internally of the first image A1, showing a plurality of tobacco products 2, though not all the tobacco products 2 making up the first image A1.

The auxiliary selection step consists likewise in selecting a second intermediate portion internally of the second image A2, showing a plurality of tobacco products 2, though not all the tobacco products 2 making up the second image A2.

Having selected the intermediate portions, the quality control procedure described above can be conducted on each single tobacco product 2 appearing in each portion.

## Claims

1. A method for monitoring the external integrity of tobacco products, including the steps of:
- scanning a first image (A1) of a single tobacco product (2a);
- selecting a first region of interest (ROI-1) within the first image (A1), presenting an area smaller than that of the selfsame first image (A1), in which the single tobacco product (2a) is represented;
- sending the first region of interest (ROI-1) to an electronic processing unit (13);
- scanning a second image (A2) of the single tobacco product (2a), subsequent to the step of scanning the first image (A1);
- selecting a second region of interest (ROI-2) within the second image (A2), presenting an area smaller than that of the selfsame second image (A2), in which the single tobacco product (2a) is represented;
- sending the second region of interest (ROI-2) to the electronic processing unit (13);
- comparing the first and second-regions of interest (ROI-1, ROI-2), by means of the electronic processing unit (13), with one or more references;
the step of comparing the first and second regions of interest (ROI-1, ROI-2) with one or more references including the steps of:
- comparing the first region of interest (ROI-1) with one or more references representative of conditions indicating the external integrity of a tobacco product;
- comparing the second region of interest (ROI-2) with one or more references representative of conditions indicating the external integrity of a tobacco product; the method comprising the steps of
- generating a notification signal (16), based on the result of the comparison between the first and the second region of interest, to indicate an impaired external integrity of the tobacco product (2a) represented in the first and second regions of interest (ROI-1, ROI-2), the method being **characterized in that** it comprises the steps of
- comparing the first and second regions of interest (ROI-1, ROI-2) one with another, in the event that both regions of interest (ROI-1, ROI-2) should present conditions indicating impaired integrity of the tobacco product (2a);
- generating the notification signal (16), in the event that the first and second regions of interest **(ROI-1, ROI-2) should be substantially identical one to another.**

2. A method as in claim 1, wherein the first and second images (A1, A2) are scanned by a single scanning device (10).

3. A method as in claim 2, wherein the scanning device (10) is a matrix type scanning device, and in particular a C-MOS camera.

4. A method as in any one of the preceding claims, wherein the first image (A1) and the second image (A2) also represent other tobacco products (2b, 2c, ...) in addition to the single tobacco product (2a).

5. A method as in any one of the preceding claims, wherein the tobacco product (2a) is directed along a predetermined monitoring path (8), the first and second images (A1, A2) are scanned on the same portion of the monitoring path (8), and the tobacco product (2a) occupies different positions along the selfsame path (8) in the first image (A1) and in the second image (A2).

6. A method as in any one of the preceding claims, wherein the tobacco product (2a) is directed along a predetermined monitoring path (8), and the step of selecting the first and second regions of interest (ROI-1, ROI-2) is activated synchronously with the movement of the advancing tobacco product (2a).

7. A method as in claim 5 or 6, wherein the first image (A1) and the second image (A2) represent a plurality of tobacco products (2) directed along the predetermined monitoring path (8), including the single tobacco product (2a) and arranged in ordered succession within the first and second images (A1, A2); the ordered succession presenting a forwardmost limit position (P1) and a rearwardmost limit position (P2) occupiable by the tobacco products; the tobacco product (2a) occupying the forwardmost limit position (P1) in the first image (A1), and occupying the rearwardmost limit position (P2) in the second image (A2).

8. A method as in claim 7, wherein the first region of interest (ROI-1) is selected to coincide with the forwardmost limit position (P1), and the second region of interest (ROI-2) is selected to coincide with the rearwardmost limit position (P2).

9. A method as in any one of the preceding claims, wherein the step of comparing the first and second regions of interest (ROI-1, ROI-2) with one or more references includes the steps of:
- determining one or more parameters (Px, Py) descriptive of each region of interest (ROI-1, ROI-2);
- comparing the descriptive parameters (Px, Py) with one or more reference parameters (Pz) representative of conditions indicating the external integrity of a tobacco product;
- generating the notification signal (16) on the basis of the comparison between the descriptive parameters (Px, Py) and the one or more reference parameters (Pz).

10. A method as in claim 1, wherein the step of comparing the first and second regions of interest (ROI-1, ROI-2) one with another includes the steps of:
- determining one or more parameters (Px, Py) descriptive of each region of interest (ROI-1, ROI-2);
- comparing the one or more parameters (Px) descriptive of the first region of interest (ROI-1) with the one or more parameters (Py) descriptive of the second region of interest (ROI-2);
- generating the notification signal (16) in the event that a difference between the one or more parameters (Px) descriptive of the first region of interest (ROI-1) and the one or more parameters (Py) descriptive of the second region of interest (ROI-2) should be less than a prescribed tolerance threshold.

11. A method as in any one of the preceding claims, wherein the notification signal (16) is a control signal serving to activate a device (14) such as will eject the tobacco product (2a).

12. Equipment for monitoring the external integrity of tobacco products (2), comprising:
- a scanning device (10) by means of which to scan a first image (A1) of a single tobacco product (2a) and, thereafter, a second image (A2) of the selfsame tobacco product (2a);
- a selection module (12) serving to select a first region of interest (ROI-1) located within the first image (A1 and presenting an area smaller than that of the selfsame first image (A1), in which the tobacco product (2a) is represented, and a second region of interest (ROI-2) located within the second image (A2) and presenting an area smaller than that of the selfsame second image (A2), in which the tobacco product (2a) is represented;
- an electronic processing unit (13), associated operationally with the scanning device (10) and with the selection module (12) and in receipt of the first and second regions of interest (ROI-1, ROI-2), configured in such a way as to compare the first and second regions of interest (ROI-1, ROI-2) with one or more references and, on the basis of the comparison, to generate a notification signal (16) representative of conditions indicating that the external integrity of the tobacco product (2a) represented in the first and second regions of interest (ROI-1, ROI-2) is impaired , the electronic processing unit (13) being associated operationally with a memory register (15) in which to store one or more references representative of conditions indicating the external integrity of a tobacco product, and being configured for the steps of:
- comparing the first region of interest (ROI-1) with the one or more references stored in the memory register (15);
- comparing the second region of interest (ROI-2) with the one or more references stored in the memory register (15); the equipment being **characterized in that** the electronic processing unit (13) is configured for the steps of:
- comparing the first and second regions of interest (ROI-1, ROI-2) one with another, in the event that both regions of interest (ROI-1, ROI-2) should present conditions indicating that the integrity of the tobacco product (2a) is impaired;
- generating the notification signal (16), in the event that the first and second regions of interest (ROI-1, ROI-2) should be substantially identical one to another.

13. Equipment as in claim 12, wherein the scanning device (10) is a matrix type scanning device, and in particular a C-MOS camera.

14. Equipment as in claim 12 or 13, wherein the first image (A1) and the second image (A2) represent other tobacco products (2b, 2c,...) in addition to the single tobacco product (2a).

15. Equipment as in any one of claims 12 to 14, wherein the first image (A1) and the second image (A2) represent one and the same portion of a path (8) along which the tobacco product (2a) is monitored; the tobacco product (2a) occupying different positions along the path (8) in the first image (A1) and in the second image (A2).

16. Equipment as in any one of claims 12 to 15, wherein the selection module (12) is activated, when selecting the first and second regions of interest (ROI-1, ROI-2), synchronously with the movement of the advancing tobacco product (2a) along a predetermined monitoring path (8).

17. An equipment as in claim 15 or 16, wherein the first image (A1) and the second image (A2) represent a plurality of tobacco products (2) directed along the predetermined monitoring path (8), including the single tobacco product (2a) and arranged in ordered succession within the first and second images (A1, A2); the ordered succession presenting a forwardmost limit position (P1) and a rearwardmost limit position (P2) occupiable by the tobacco products; the tobacco product (2a) occupying the forwardmost limit position (P1) in the first image (A1), and occupying the rearwardmost limit position (P2) in the second image (A2).

18. Equipment as in claim 17, wherein the selection module (12) is configured in such a way as to select a first region of interest (ROI-1) coinciding with the forwardmost limit position (P1), and to select a second region of interest (ROI-2) coinciding with the rearwardmost limit position (P2).

19. Equipment as in any one of claims 12 to 18, wherein the processing unit (13) is configured for the steps of:
- determining one or more parameters (Px, Py) descriptive of each region of interest (ROI-1, ROI-2);
- comparing the descriptive parameters (Px, Py) with one or more reference parameters (Pz) representative of conditions indicating the external integrity of a tobacco product, stored in a memory register (15);
- generating the notification signal (16) on the basis of the comparison between the descriptive parameters (Px, Py) and the one or more reference parameters (Pz).

20. Equipment as in claim 19, wherein the processing unit (13) is configured for the steps of:
- determining one or more parameters (Px, Py) descriptive of each region of interest (ROI-1, ROI-2);
- comparing the one or more parameters (Px) descriptive of the first region of interest (ROI-1) with the one or more parameters (Py) descriptive of the second region of interest (ROI-2);
- generating the notification signal (16) in the event that a difference between the one or more descriptive parameters (Px) relative to the first region of interest (ROI-1) and the one or more descriptive parameters (Py) relative to the second region of interest (ROI-2) should be less than a prescribed tolerance threshold.

21. Equipment as in any one of the preceding claims **from 12 to 20**, wherein the notification signal (16) is a control signal serving to activate a device (14) such as will eject the tobacco product (2a).

## Patentansprüche

1. Verfahren zur Überprüfung der externen Integrität von Tabakprodukten, einschließend die folgenden Schritte:
- Abtasten eines ersten Bildes (A1) eines einzelnen Tabakprodukts (2a);
- Auswählen einer ersten Region of Interest (ROI-1) innerhalb des ersten Bildes (A1), aufweisend einen Bereich, der kleiner ist als der des ersten Bildes (A1), in dem das einzelne Tabakprodukt (2a) dargestellt ist;
- Übermitteln der ersten Region of Interest (ROI-1) an eine elektronische Verarbeitungseinheit (13);
- Abtasten eines zweiten Bildes (A2) des einzelnen Tabakprodukts (2a) nach dem Schritt des Abtastens des ersten Bildes (A1);
- Auswählen einer zweiten Region of Interest (ROI-2) innerhalb des zweiten Bildes (A2), aufweisend einen Bereich, der kleiner ist als der des zweiten Bildes (A2), in dem das einzelne Tabakprodukt (2a) dargestellt ist;
- Übermitteln der zweiten Region of Interest (ROI-2) an die elektronische Verarbeitungseinheit (13);
- Vergleichen der ersten und der zweiten Region of Interest (ROI-1, ROI-2) mittels der elektronischen Verarbeitungseinheit (13) mit einer oder mehreren Referenzen;
wobei der Schritt des Vergleichens der ersten und der zweiten Region of Interest (ROI-1, ROI-2) mit einer oder mehreren Referenzen folgende Schritte umfasst:
- Vergleichen der ersten Region of Interest (ROI-1) mit einer oder mehreren Referenzen, repräsentativ für Bedingungen, die die externe Integrität eines Tabakprodukts angeben;
- Vergleichen der zweiten Region of Interest (ROI-2) mit einer oder mehreren Referenzen, repräsentativ für Bedingungen, die die externe Integrität eines Tabakprodukts angeben, wobei das Verfahren folgende Schritte umfasst:
- Generieren eines Benachrichtigungssignals (16), basierend auf dem Ergebnis des Vergleichs zwischen der ersten und der zweiten Region of Interest, um eine beeinträchtigte externe Integrität des Tabakprodukts (2a) anzugeben, dargestellt in der ersten und zweiten Region of Interest (ROI-1, ROI-2), wobei das Verfahren **dadurch gekennzeichnet ist, dass** es folgende Schritte umfasst:
- Vergleichen der ersten und zweiten Region of Interest (ROI-1, ROI-2) miteinander, wenn beide Regions of Interest (ROI-1, ROI-2) Bedingungen aufweisen, die eine beeinträchtigte Integrität das Tabakprodukts (2a) angeben;
- Generieren des Benachrichtigungssignals (16), wenn die erste und die zweite Region of Interest (ROI-1, ROI-2) im Wesentlichen identisch miteinander sind.

2. Verfahren nach Anspruch 1, wobei das erste und das zweite Bild (A1 A2) von einer einzelnen Abtastvorrichtung (10) abgetastet werden.

3. Verfahren nach Anspruch 2, wobei es sich bei der Abtastvorrichtung (10) um eine Matrix-Abtastvorrichtung und insbesondere um eine C-MOS-Kamera handelt.

4. Verfahren nach einem der vorhergehenden Ansprüche, wobei das erste Bild (A1) und das zweite Bild (A2) ebenfalls andere Tabakprodukte (2b, 2c usw.) zusätzlich zum einzelnen Tabakprodukt (2a) darstellen.

5. Verfahren nach einem der vorhergehenden Ansprüche, wobei das Tabakprodukt (2a) entlang eines vorgegebenen Überprüfungswegs (8) gerichtet wird, das erste und das zweite Bild (A1 A2) auf demselben Abschnitt des Überprüfungswegs (8) abgetastet werden und das Tabakprodukt (2a) unterschiedliche Positionen entlang desselben Wegs (8) im ersten Bild (A1) und im zweiten Bild (A2) einnimmt.

6. Verfahren nach einem der vorhergehenden Ansprüche, wobei das Tabakprodukt (2a) entlang eines vorgegebenen Überprüfungswegs (8) gerichtet wird und der Schritt des Auswählens der ersten und der zweiten Region of Interest (ROI-1, ROI-2) synchron mit der Bewegung des vorgeschobenen Tabakprodukts (2a) aktiviert wird.

7. Verfahren nach Anspruch 5 oder 6, wobei das erste Bild (A1) und das zweite Bild (A2) eine Vielzahl von Tabakprodukten (2) darstellen, die entlang des vorgegebenen Überprüfungswegs (8) gerichtet werden, einschließlich des einzelnen Tabakprodukts (2a), und in geordneter Abfolge im ersten und zweiten Bild (A1, A2) angeordnet sind; wobei die geordnete Abfolge eine vorderste Grenzposition (P1) und eine hinterste Grenzposition (P2) aufweist, einnehmbar von den Tabakprodukten; wobei das Tabakprodukt (2a) die vorderste Grenzposition (P1) im ersten Bild (A1) einnimmt und die hinterste Grenzposition (P2) im zweiten Bild (A2) einnimmt.

8. Verfahren nach Anspruch 7, wobei die erste Region of Interest (ROI-1) ausgewählt wird, um mit der vordersten Grenzposition (P1) übereinzustimmen, und die zweite Region of Interest (ROI-2) ausgewählt wird, um mit der hintersten Grenzposition (P2) übereinzustimmen.

9. Verfahren nach einem der vorhergehenden Ansprüche, wobei der Schritt des Vergleichens der ersten und der zweiten Region of Interest (ROI-1, ROI-2) mit einer oder mehreren Referenzen folgende Schritte umfasst:
- Festlegen eines oder mehrerer Parameter (Px, Py), beschreibend jede Region of Interest (ROI-1, ROI-2);
- Vergleichen der beschreibenden Parameter (Px, Py) mit einem oder mehreren Referenzparameter (Pz), repräsentativ für Bedingungen, die die externe Integrität eines Tabakprodukts angeben;
- Generieren des Benachrichtigungssignals (16) auf der Grundlage des Vergleichs zwischen den beschreibenden Parametern (Px, Py) und dem einen oder den mehreren Referenzparametern (Pz).

10. Verfahren nach Anspruch 1, wobei der Schritt des Vergleichens der ersten und der zweiten Region of Interest (ROI-1, ROI-2) miteinander folgende Schritte umfasst:
- Festlegen eines oder mehrerer Parameter (Px, Py), beschreibend jede Region of Interest (ROI-1, ROI-2);
- Vergleichen des einen oder der mehreren Parameter (Px), beschreibend die erste Region of Interest (ROI-1), mit dem einen oder den mehreren Parametern (Py), beschreibend die zweite Region of Interest (ROI-2);
- Generieren des Benachrichtigungssignals (16), wenn ein Unterschied zwischen dem einen oder den mehreren Parametern (Px), beschreibend die erste Region of Interest (ROI-1), und dem einen oder den mehreren Parametern (Py), beschreibend die zweite Region of Interest (ROI-2), niedriger ist als ein vorgeschriebener Toleranzschwellenwert.

11. Verfahren nach einem der vorhergehenden Ansprüche, wobei es sich beim Benachrichtigungssignal (16) um ein Steuersignal handelt, das dazu dient, eine Vorrichtung (14) zu aktivieren, um das Tabakprodukt (2a) auszuwerfen.

12. Gerät zur Überprüfung der externen Integrität von Tabakprodukten (2), umfassend:
- eine Abtastvorrichtung (10), mittels derer ein erstes Bild (A1) eines einzelnen Tabakprodukts (2a) und danach ein zweites Bild (A2) desselben Tabakprodukts (2a) abgetastet werden;
- ein Auswahlmodul (12), das dazu dient, eine erste Region of Interest (ROI-1) innerhalb des ersten Bildes (A1) auszuwählen und aufweisend einen Bereich, der kleiner ist als der des ersten Bildes (A1), in dem das Tabakprodukt (2a) dargestellt ist, und eine zweite Region of Interest (ROI-2), befindlich innerhalb des zweiten Bildes (A2) und aufweisend einen Bereich, der kleiner ist als der des zweiten Bildes (A2), in dem das Tabakprodukt (2a) dargestellt ist;
- eine elektronische Verarbeitungseinheit (13), betriebswirksam verbunden mit der Abtastvorrichtung (10) und mit dem Auswahlmodul (12) und im Empfang der ersten und der zweiten Region of Interest (ROI-1, ROI-2), so eingerichtet, dass die erste und die zweite Region of Interest (ROI-1, ROI-2) mit einer oder mehreren Referenzen verglichen werden, und so, dass auf der Grundlage des Vergleichs ein Benachrichtigungssignal (16) generiert wird, das für Bedingungen repräsentativ ist, die angeben, dass die externe Integrität des Tabakprodukts (2a), dargestellt in der ersten und der zweiten Region of Interest (ROI-1, ROI-2), beeinträchtigt ist, wobei die Verarbeitungseinheit (13) betriebswirksam mit einem Speicherregister (15) verbunden ist, in dem eine oder mehrere Referenzen gespeichert werden, die repräsentativ für Bedingungen sind, die die externe Integrität eines Tabakprodukts angeben, wobei diese für folgende Schritte eingerichtet ist:
- Vergleichen der ersten Region of Interest (ROI-1) mit einer oder mehreren Referenzen, gespeichert im Speicherregister (15);
- Vergleichen der zweiten Region of Interest (ROI-2) mit einer oder mehreren Referenzen, gespeichert im Speicherregister (15); wobei das Gerät **dadurch gekennzeichnet ist, dass** die elektronische Verarbeitungseinheit (13) für folgende Schritte eingerichtet ist:
- Vergleichen der ersten und zweiten Region of Interest (ROI-1, ROI-2) miteinander, wenn beide Regions of Interest (ROI-1, ROI-2) Bedingungen aufweisen, die angeben, dass die Integrität des Tabakprodukts (2a) beeinträchtigt ist;
- Generieren des Benachrichtigungssignals (16), wenn die erste und die zweite Region of Interest (ROI-1, ROI-2) im Wesentlichen identisch miteinander sind.

13. Gerät nach Anspruch 12, wobei es sich bei der Abtastvorrichtung (10) um eine Matrix-Abtastvorrichtung und insbesondere um eine C-MOS-Kamera handelt.

14. Gerät nach Anspruch 12 oder 13, wobei das erste Bild (A1) und das zweite Bild (A2) andere Tabakprodukte (2b, 2c usw.) zusätzlich zum einzelnen Tabakprodukt (2a) darstellen.

15. Gerät nach einem der Ansprüche 12 bis 14, wobei das erste Bild (A1) und das zweite Bild (A2) ein und denselben Abschnitt eines Wegs (8) darstellen, entlang dessen das Tabakprodukt (2a) überprüft wird; wobei das Tabakprodukt (2a) unterschiedliche Positionen entlang des Wegs (8) im ersten Bild (A1) und im zweiten Bild (A2) einnimmt.

16. Gerät nach einem der Ansprüche 12 bis 15, wobei das Auswahlmodul (12) beim Auswählen der ersten und der zweiten Region of Interest (ROI-1, ROI-2) synchron mit der Bewegung des vorgeschobenen Tabakprodukts (2a) entlang eines vorgegebenen Überprüfungswegs (8) aktiviert wird.

17. Gerät nach Anspruch 15 oder 16, wobei das erste Bild (A1) und das zweite Bild (A2) eine Vielzahl von Tabakprodukten (2) darstellen, die entlang des vorgegebenen Überprüfungswegs (8) gerichtet werden, einschließlich des einzelnen Tabakprodukts (2a), und in geordneter Abfolge im ersten und zweiten Bild (A1, A2) angeordnet sind; wobei die geordnete Abfolge eine vorderste Grenzposition (P1) und eine hinterste Grenzposition (P2) aufweist, einnehmbar von den Tabakprodukten; wobei das Tabakprodukt (2a) die vorderste Grenzposition (P1) im ersten Bild (A1) einnimmt und die hinterste Grenzposition (P2) im zweiten Bild (A2) einnimmt.

18. Gerät nach Anspruch 17, wobei das Auswahlmodul (12) so eingerichtet ist, dass es eine erste Region of Interest (ROI-1) auswählt, die mit der vordersten Grenzposition (P1) übereinstimmt, und eine zweite Region of Interest (ROI-2) auswählt, die mit der hintersten Grenzposition (P2) übereinstimmt.

19. Gerät nach einem der Ansprüche 12 bis 18, wobei die Verarbeitungseinheit (13) für folgende Schritte eingerichtet ist:
- Festlegen eines oder mehrerer Parameter (Px, Py), beschreibend jede Region of Interest (ROI-1, ROI-2);
- Vergleichen der beschreibenden Parameter (Px, Py) mit einem oder mehreren Referenzparametern (Pz), repräsentativ für Bedingungen, die die externe Integrität eines Tabakprodukts angeben, gespeichert in einem Speicherregister (15);
- Generieren des Benachrichtigungssignals (16) auf der Grundlage des Vergleichs zwischen den beschreibenden Parametern (Px, Py) und dem einen oder den mehreren Referenzparametern (Pz).

20. Gerät nach Anspruch 19, wobei die Verarbeitungseinheit (13) für folgende Schritte eingerichtet ist:
- Festlegen eines oder mehrerer Parameter (Px, Py), beschreibend jede Region of Interest (ROI-1, ROI-2);
- Vergleichen des einen oder der mehreren Parameter (Px), beschreibend die erste Region of Interest (ROI-1), mit dem einen oder den mehreren Parametern (Py), beschreibend die zweite Region of Interest (ROI-2);
- Generieren des Benachrichtigungssignals (16), wenn ein Unterschied zwischen dem einen oder den mehreren beschreibenden Parametern (Px) bezüglich der ersten Region of Interest (ROI-1) und dem einen oder den mehreren beschreibenden Parametern (Py) bezüglich der zweiten Region of Interest (ROI-2) geringer ist als ein vorgeschriebener Toleranzschwellenwert.

21. Gerät nach einem der vorhergehenden Ansprüche 12 bis 20, wobei es sich beim Benachrichtigungssignal (16) um ein Steuersignal handelt, das dazu dient, eine Vorrichtung (14) zu aktivieren, um das Tabakprodukt (2a) auszuwerfen.

## Revendications

1. Procédé pour contrôler l'intégrité extérieure de produits de tabac, incluant les étapes de :
- scanner une première image (A1) d'un seul produit de tabac (2a) ;
- sélectionner une première zone d'intérêt (ROI-1) à l'intérieur de la première image (A1) présentant une zone plus petite que celle de ladite première image (A1), dans laquelle le seul produit de tabac (2a) est représenté ;
- envoyer la première zone d'intérêt (ROI-1) à une unité de traitement électronique (13) ;
- scanner une seconde image (A2) du seul produit de tabac (2a), après l'étape de scannérisation de la première image (A1) ;
- sélectionner une seconde zone d'intérêt (ROI-2) à l'intérieur de la seconde image (A2) présentant une zone plus petite que celle de ladite seconde image (A2), dans laquelle le seul produit de tabac (2a) est représenté ;
- envoyer la seconde zone d'intérêt (ROI-2) à une unité de traitement électronique (13) ;
- comparer les première et seconde zones d'intérêt (ROI-1, ROI-2), au moyen de l'unité de traitement électronique (13), avec une ou plusieurs références ;
l'étape de comparaison des première et seconde zones d'intérêt (ROI-1, ROI-2) avec une ou plusieurs références incluant les étapes de :
- comparer la première zone d'intérêt (ROI-1) avec une ou plusieurs références représentatives de conditions indiquant l'intégrité extérieure d'un produit de tabac ;
- comparer la seconde zone d'intérêt (ROI-2) avec une ou plusieurs références représentatives de conditions indiquant l'intégrité extérieure d'un produit de tabac ; le procédé comprenant les étapes de :
- générer un signal de notification (16), basé sur le résultat de la comparaison entre la première et la seconde zone d'intérêt, pour indiquer une intégrité extérieure altérée du produit de tabac (2a) représentée dans les première et seconde zones d'intérêt (ROI-1, ROI-2), le procédé étant **caractérisé en ce qu'**il comprend les étapes de :
- comparer les première et seconde zones d'intérêt (ROI-1, ROI-2) l'une avec l'autre, dans le cas où les deux zones d'intérêt (ROI-1, ROI-2) présenteraient des conditions indiquant une intégrité altérée du produit de tabac (2a) ;
- générer le signal de notification (16), dans le cas où les première et seconde zones d'intérêt (ROI-1, ROI-2) seraient substantiellement identiques l'une à l'autre.

2. Procédé selon la revendication 1, dans lequel les première et seconde images (A1, A2) sont scannées par un seul dispositif à balayage (10).

3. Procédé selon la revendication 2, dans lequel le dispositif à balayage (10) est un dispositif à balayage matriciel, et en particulier une caméra C-MOS.

4. Procédé selon l'une quelconque des revendications précédentes, dans lequel la première image (A1) et la seconde image (A2) représentent aussi d'autres produits de tabac (2b, 2c, ...) en plus du seul produit de tabac (2a).

5. Procédé selon l'une quelconque des revendications précédentes, dans lequel le produit de tabac (2a) est dirigé le long d'un parcours de contrôle prédéterminé (8), les première et seconde images (A1, A2) sont scannées au niveau de la même partie du parcours de contrôle (8) et le produit de tabac (2a) occupe des positions différentes le long dudit parcours (8) dans la première image (A1) et dans la seconde image (A2).

6. Procédé selon l'une quelconque des revendications précédentes, dans lequel le produit de tabac (2a) est dirigé le long d'un parcours de contrôle prédéterminé (8) et l'étape de sélection des première et seconde zones d'intérêt (ROI-1, ROI-2) est activée de façon synchrone avec le mouvement de progression du produit de tabac (2a).

7. Procédé selon les revendications 5 ou 6, dans lequel la première image (A1) et la seconde image (A2) représentent une pluralité de produits de tabac (2) dirigés le long du parcours de contrôle prédéterminé (8), incluant le seul produit de tabac (2a) et disposés dans une succession ordonnée à l'intérieur des première et seconde images (A1, A2) ; la succession ordonnée présentant une position extrême initiale (P1) et une position extrême finale (P2) pouvant être occupées par les produits de tabac ; le produit de tabac (2a) occupant la position extrême initiale (P1) dans la première image (A1) et occupant la position extrême finale (P2) dans la seconde image (A2).

8. Procédé selon la revendication 7, dans lequel la première zone d'intérêt (ROI-1) est sélectionnée pour coïncider avec la position extrême initiale (P1) et la seconde zone d'intérêt (ROI-2) est sélectionnée pour coïncider avec la position extrême finale (P2).

9. Procédé selon l'une quelconque des revendications précédentes, dans lequel l'étape de comparaison des première et seconde zones d'intérêt (ROI-1, ROI-2) avec une ou plusieurs références inclut les étapes de :
- déterminer un ou plusieurs paramètres (Px, Py) descriptifs de chaque zone d'intérêt (ROI-1, ROI-2) ;
- comparer les paramètres descriptifs (Px, Py) avec un ou plusieurs paramètres de référence (Pz) représentatifs de conditions indiquant l'intégrité extérieure d'un produit de tabac ;
- générer le signal de notification (16) sur la base de la comparaison entre les paramètres descriptifs (Px, Py) et l'un ou plusieurs des paramètres de référence (Pz).

10. Procédé selon la revendication 1, dans lequel l'étape de comparaison réciproque des première et seconde zones d'intérêt (ROI-1, ROI-2) inclut les étapes de :
- déterminer un ou plusieurs paramètres (Px, Py) descriptifs de chaque zone d'intérêt (ROI-1, ROI-2) ;
- comparer l'un ou plusieurs paramètres (Px) descriptifs de la première zone d'intérêt (ROI-1) avec l'un ou plusieurs paramètres (Py) descriptifs de la seconde zone d'intérêt (ROI-2) ;
- générer le signal de notification (16) dans le cas où une différence, entre l'un ou plusieurs paramètres (Px) descriptifs de la première zone d'intérêt (ROI-1) et l'un ou plusieurs paramètres (Py) descriptifs de la seconde zone d'intérêt (ROI-2), serait inférieure à un seuil de tolérance préétabli ;

11. Procédé selon l'une quelconque des revendications précédentes, dans lequel le signal de notification (16) est un signal de commande servant à activer un dispositif (14) permettant d'éjecter le produit de tabac (2a).

12. Equipement servant à contrôler l'intégrité extérieure de produits de tabac (2), comprenant :
- un dispositif à balayage (10) qui permet de scanner une première image (A1) d'un seul produit de tabac (2a) et, par la suite, une seconde image (A2) dudit produit de tabac (2a) ;
- un module de sélection (12) servant à sélectionner une première zone d'intérêt (ROI-1) située à l'intérieur de la première image (A1) et présentant une zone plus petite que celle de ladite première image (A1), dans laquelle le produit de tabac (2a) est représenté, et une seconde zone d'intérêt (ROI-2) située à l'intérieur de la seconde image (A2) et présentant une zone plus petite que celle de ladite seconde image (A2), dans laquelle le produit de tabac (2a) est représenté ;
- une unité de traitement électronique (13), fonctionnellement associée au dispositif à balayage (10) et au module de sélection (12) et pour recevoir les première et seconde zones d'intérêt (ROI-1, ROI-2), configurée de manière à comparer les première et seconde zones d'intérêt (ROI-1, ROI-2) à une ou plusieurs références et, sur la base de la comparaison, pour générer un signal de notification (16) représentatif de conditions indiquant que l'intégrité extérieure du produit de tabac (2a) représentée dans les première et seconde zones d'intérêt (ROI-1, ROI-2) est altérée, l'unité de traitement électronique (13) étant fonctionnellement associée à un registre de mémoire (15) dans lequel sont stockées une ou plusieurs références représentatives de conditions indiquant l'intégrité extérieure d'un produit de tabac et étant configurée pour les étapes de :
- comparer la première zone d'intérêt (ROI-1) à l'une ou plusieurs références stockées dans le registre de mémoire (15) ;
- comparer la seconde zone d'intérêt (ROI-2) à l'une ou plusieurs références stockées dans le registre de mémoire (15) ; l'équipement étant **caractérisé en ce que** l'unité de traitement électronique (13) est configurée pour les étapes de :
- comparer les première et seconde zones d'intérêt (ROI-1, ROI-2) l'une avec l'autre, dans le cas où les deux zones d'intérêt (ROI-1, ROI-2) présenteraient des conditions indiquant que l'intégrité du produit de tabac (2a) est altérée ;
- générer le signal de notification (16), dans le cas où les première et seconde zones d'intérêt (ROI-1, ROI-2) seraient substantiellement identiques l'une à l'autre.

13. Equipement selon la revendication 12, dans lequel le dispositif à balayage (10) est un dispositif à balayage matriciel, et en particulier, une caméra C-MOS.

14. Equipement selon les revendications 12 ou 13, dans lequel la première image (A1) et la seconde image (A2) représentent aussi d'autres produits de tabac (2b, 2c, ...) en plus du seul produit de tabac (2a).

15. Equipement selon l'une quelconque des revendications de 12 à 14, dans lequel la première image (A1) et la seconde image (A2) représentent une et la même partie d'un parcours (8) le long duquel le produit de tabac (2a) est contrôlé ; le produit de tabac (2a) occupant différentes positions le long du parcours (8) dans la première image (A1) et dans la seconde image (A2).

16. Equipement selon l'une quelconque des revendications de 12 à 15, dans lequel le module de sélection (12) est activé lors de la sélection des première et seconde zones d'intérêt (ROI-1, ROI-2) de façon synchrone avec le mouvement de progression du produit de tabac (2a) le long d'un parcours de contrôle prédéterminé (8).

17. Equipement selon les revendications 15 ou 16, dans lequel la première image (A1) et la seconde image (A2) représentent une pluralité de produits de tabac (2) dirigés le long du parcours de contrôle prédéterminé (8), incluant le seul produit de tabac (2a) et disposés dans une succession ordonnée à l'intérieur des première et seconde images (A1, A2) ; la succession ordonnée présentant une position extrême initiale (P1) et une position extrême finale (P2) pouvant être occupées par les produits de tabac ; le produit de tabac (2a) occupant la position extrême initiale (P1) dans la première image (A1) et occupant la position extrême finale (P2) dans la seconde image (A2).

18. Equipement selon la revendication 17, dans lequel le module de sélection (12) est configuré de manière à sélectionner une première zone d'intérêt (ROI-1) coïncidant avec la position extrême initiale (P1) et à sélectionner une seconde zone d'intérêt (ROI-2) coïncidant avec la position extrême finale (P2).

19. Equipement selon l'une quelconque des revendications de 12 à 18, dans lequel l'unité de traitement (13) est configurée pour les étapes de :
- déterminer un ou plusieurs paramètres (Px, Py) descriptifs de chaque zone d'intérêt (ROI-1, ROI-2) ;
- comparer les paramètres descriptifs (Px, Py) à un ou plusieurs paramètres de référence (Pz) représentatifs de conditions indiquant l'intégrité extérieure d'un produit de tabac stockés dans un registre de mémoire (15) ;
- générer le signal de notification (16) sur la base de la comparaison entre les paramètres descriptifs (Px, Py) et l'un ou plusieurs des paramètres de référence (Pz).

20. Equipement selon la revendication 19, dans lequel l'unité de traitement (13) est configurée pour les étapes de :
- déterminer un ou plusieurs paramètres (Px, Py) descriptifs de chaque zone d'intérêt (ROI-1, ROI-2) ;
- comparer l'un ou plusieurs paramètres (Px) descriptifs de la première zone d'intérêt (ROI-1) avec l'un ou plusieurs paramètres (Py) descriptifs de la seconde zone d'intérêt (ROI-2) ;
- générer le signal de notification (16) dans le cas où une différence, entre l'un ou plusieurs paramètres descriptifs (Px) concernant la première zone d'intérêt (ROI-1) et l'un ou plusieurs paramètres descriptifs (Py) concernant la seconde zone d'intérêt (ROI-2), serait inférieure à un seuil de tolérance préétabli.

21. Equipement selon l'une quelconque des revendications de 12 à 20, dans lequel le signal de notification (16) est un signal de commande servant à activer un dispositif (14) permettant d'éjecter le produit de tabac (2a).
